# EUROPEAN PATENT SPECIFICATION

(11) **EP 3 738 911 B1**
(45) Date of publication and mention of the grant of the patent: **30.03.2022**
(21) Application number: 20172265.9
(22) Date of filing: 30.04.2020
(51) Int. Cl.: B65G 69/34

(54) **SHOCK-ABSORBING BUFFER FOR LOADING BAYS**
STOSSDÄMPFENDER PUFFER FÜR LADEBUCHTEN
TAMPON AMORTISSEUR POUR LES QUAIS DE CHARGEMENT

(30) Priority: 13.05.2019 IT 201900006779
(43) Date of publication of application: 18.11.2020
(73) Proprietor: Argalia, Massimo, 60127 Ancona (IT)
(72) Inventor: Argalia, Massimo, 60127 Ancona (IT)
(74) Representative: Baldi, Claudio

(56) References cited:
- EP-A1- 3 466 850
- WO-A2-2007/076507
- DE-A1- 19 525 308
- DE-A1-102013 000 075
- US-A- 4 307 876

## Description

The present patent application for industrial invention relates to a shock-absorbing buffer for loading bays or stations. The field of reference is the loading and unloading of goods from a warehouse to a vehicle and vice versa.

As it is known, loading bays have an extremely important function in the transportations and logistics system. In fact, they are the connection point between production and transportation and between storage and distribution.

Loading bays are installed in industrial buildings, commercial buildings and workshops in order to load/unload the goods into/from the vehicle that approaches the loading bay with a backward movement.

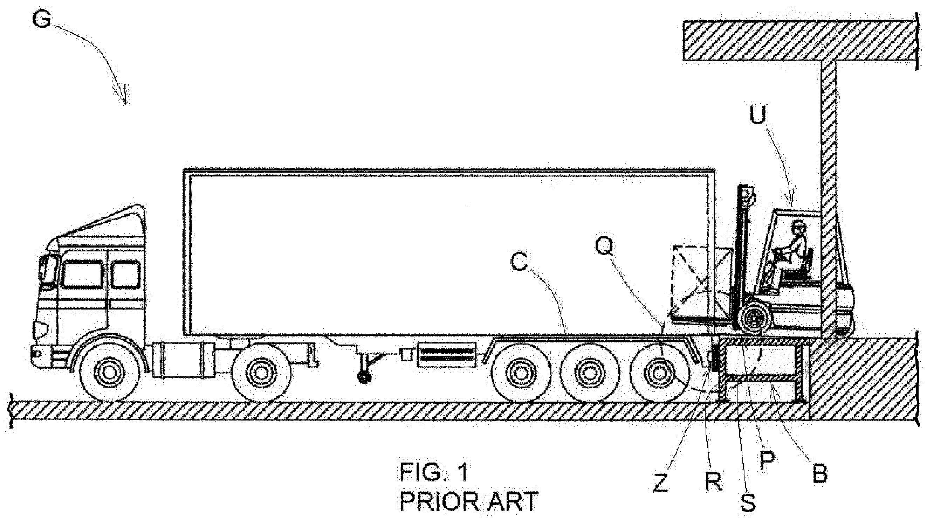

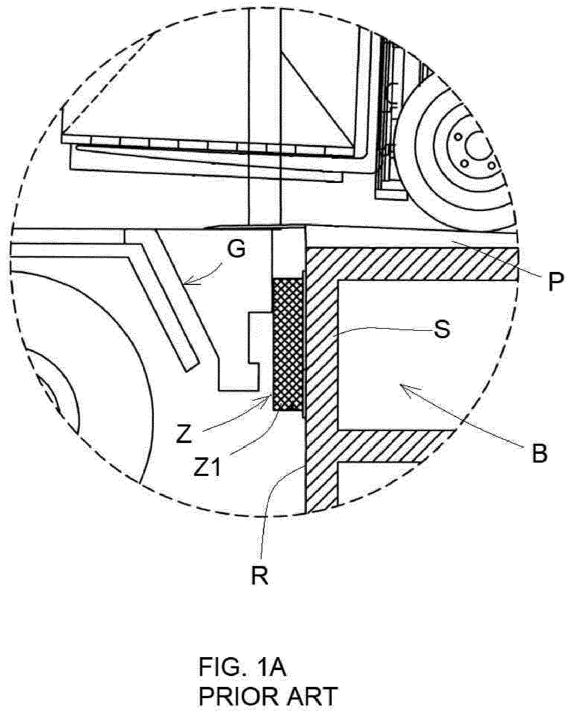

The prior art is described herein below with reference to Figs. 1 and 1A, wherein:
Fig. 1 is a diagrammatic view of a loading/unloading area, wherein a vehicle has approached a loading bay provided with the buffer of the prior art with a backward movement.
Fig. 1A is an enlargement of the detail enclosed in the circle Q of Fig. 1.

In case of loading bays that are not realized with reinforced concrete, a loading bay (B) comprises a metal bearing framework (S) that is disposed in contact with the wall of the warehouse where the goods are stored immediately under the loading/unloading door of the warehouse.

The loading bay (B) usually comprises a movable platform (P) disposed on the bearing framework (S) and removably connected to the bearing framework (S). Said platform (P) acts as a bridge, connecting the loading platform (C) of the vehicle (G) and the drive-over surface of the loading bay (B).

The bearing framework (S) has a front vertical wall (R) against which the vehicle (G), and in particular the rear bumper of the vehicle (G), is stopped.

In order to avoid damaging the loading bay (B) and/or the vehicle (G), the loading bays (B) are provided with buffers (Z) that are fixed on said front vertical wall (R) of the bearing framework (S) and are suitable for absorbing the impact of the vehicle (G) against the loading bay (B). Otherwise said, the function of said buffers (Z), which are normally provided in the number of two and are spaced by a distance that is slightly lower than the width of the vehicle (G), is to avoid the direct contact between the vehicle (G) and said front vertical wall (R) of the loading bay (B) and consequently avoid damages of the vehicle (G) on one side and of said front vertical wall (R) on the other side that may be caused by the frictional contact of the two surfaces during the inevitable up-down movements of the vehicle during the loading or unloading of the goods.

The buffer (Z) of the prior art comprises a rubber piece (Z1) supported by a frame that basically consists in a vertical plate suitable for being fixed to the front vertical wall (R).

The loading and the unloading of a vehicle (G) provides for the following operating steps:
- Approaching the loading bay (B) with the vehicle (G) until said vehicle (G) is in contact with said buffer (Z);
- Moving the movable platform (P) until its ending portion is disposed onto the loading platform (C);
- Loading/unloading the goods into/from the vehicle (G) by means of a conventional forklift truck (U) that is driven over said movable platform (P) to alternatively move between the warehouse where the goods are stored and the loading platform (C).

The weight on the loading platform (C) varies because of the movement of the forklift truck (U) and also because of the goods that are being loaded/unloaded. In view of the above, the loading platform (C) of the vehicle (G) inevitably makes up-down vertical movements that are accompanied by an energetic friction between the rubber piece (Z1) and the vehicle (G), with a progressive abrasive action of the surface of the rubber piece (Z1) that can get easily cracked or broken, completely losing its function.

Although a similar rubber piece (Z1) is capable of acting as stop for the backward movement of the vehicle (G), absorbing the impact against the loading platform (B), the rubber piece (Z1) is impaired by a limitation or functional drawback related with the mechanical wear generated by said up-down movements of the vehicle (G) caused during the loading and unloading operations and generated by the impacts suffered during the approaching movement of the vehicle.

Moreover, in case of severe damage, said rubber piece (Z1) must be replaced in order to avoid damaging the loading bay, as it frequently occurs.

EP3466850 discloses a buffer device with the features of the preamble of claim 1 comprising:
- a frame suitable for being fixed to a loading station;
- a backing element that is hinged to an upper end of the frame;
- elastic buffers disposed between the frame and the backing element.

The backing element is deformable in such a way to slide (translate) vertically downwards. The backing element is shaped like a plate with trapezoidal section with flat surfaces and sharp corners in order to get deformed during the impact of a vehicle. The fact that said backing element is deformable makes it even more vulnerable.

Moreover, the downward sliding movement of the backing element is difficult to obtain. Such a sliding movement may be performed when the backing element is elastically deformed. In view of the above, the backing element is not a metal plate because a metal plate cannot be elastic. In such a case, if the backing element is not a metal plate, it cannot withstand the thrust of the vehicle and the counterthrust of the elastomer disposed between the frame and the backing element.

The lower end of the backing element is engaged inside a housing of the frame, like a clip, in order to be guided during its translation. Therefore, the lower end of the backing element is always in contact with the frame. During the impact, the backing element is compressed and deformed, translating downwards. Such a deformation of the backing element generates a slight rotation of a few degrees around its upper pivoting axis.

Such a buffer device is impaired by several drawbacks. It is complex because its upper hinge must permit a roto-translation.

During the impact, the vehicle comes in contact with a large area of the backing element, generating high friction and deformation. Therefore the backing element is rapidly exposed to severe wear. If the backing element is a metal plate that always works in elastic range, failure can be generated when the elastic range is exceeded, even for only one time. Being compressed between the frame and the backing element, the elastic buffers are exposed to rapid wear.

The purpose of the present invention is to overcome the drawbacks of the prior art by disclosing a buffer that is reliable and wear-free.

Another purpose of the present invention is to devise a buffer that is capable of suitably protecting the loading bay where it is installed.

An additional purpose is to devise a buffer that is simple to make and install in a loading bay.

These purposes are achieved according to the invention with the characteristics of the appended independent claim 1.

Advantageous embodiments appear from the dependent claims.

The buffer according to the invention is defined by claim 1.

For the sake of clarity, the description of the buffer according to the invention continues with reference to the appended drawings, which have a merely illustrative, not limiting value, wherein:
Fig. 2 is an axonometric view of the buffer according to the invention;
Figs. 3 and 4 are two exploded axonometric views of the buffer according to the invention, shown from two different angles;
Fig. 5 is a partially sectioned side view of the buffer in a first idle position;
Fig. 6 is a partially sectioned side view of the buffer in a second maximum operating position;
Fig. 7 is an axonometric view of a portion of a loading bay where the buffer of the invention is fixed.

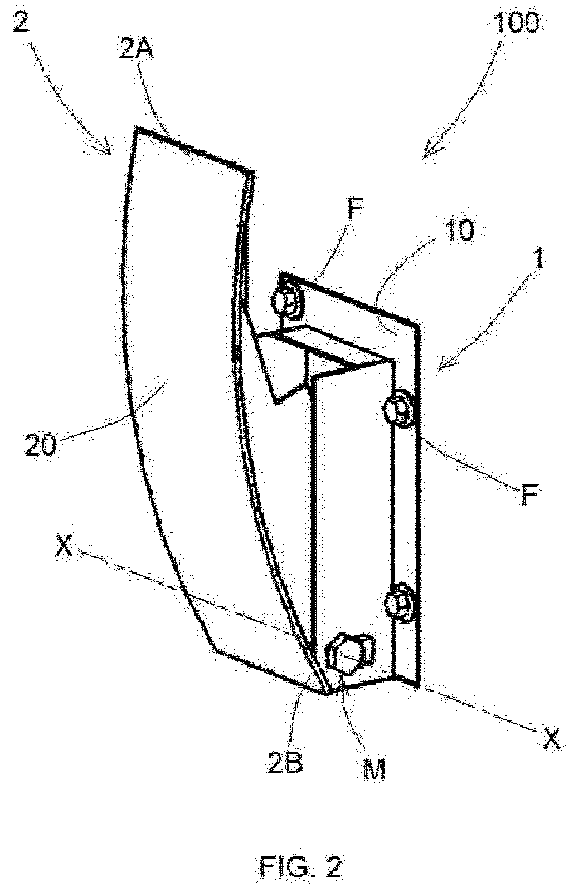

With reference to Figs. 2, 3 and 4, a buffer according to the invention is disclosed, which is generally indicated with reference numeral (100).

The buffer (100) is suitable for being fixed to a new loading bay (B) or to an existing loading bay (B).

The buffer (100) comprises a bearing frame (1) suitable for being fixed to a front vertical wall (R) of the loading bay (B) with fixing means (F), and a backing element (2) connected to the bearing frame (1). The backing element (2) is suitable for receiving the impact of the vehicle (G) at the end of its backward movement. The backing element (2) comprises a head portion (2A) and a base portion (2B). The backing element (2) is not deformable during the use of the buffer.

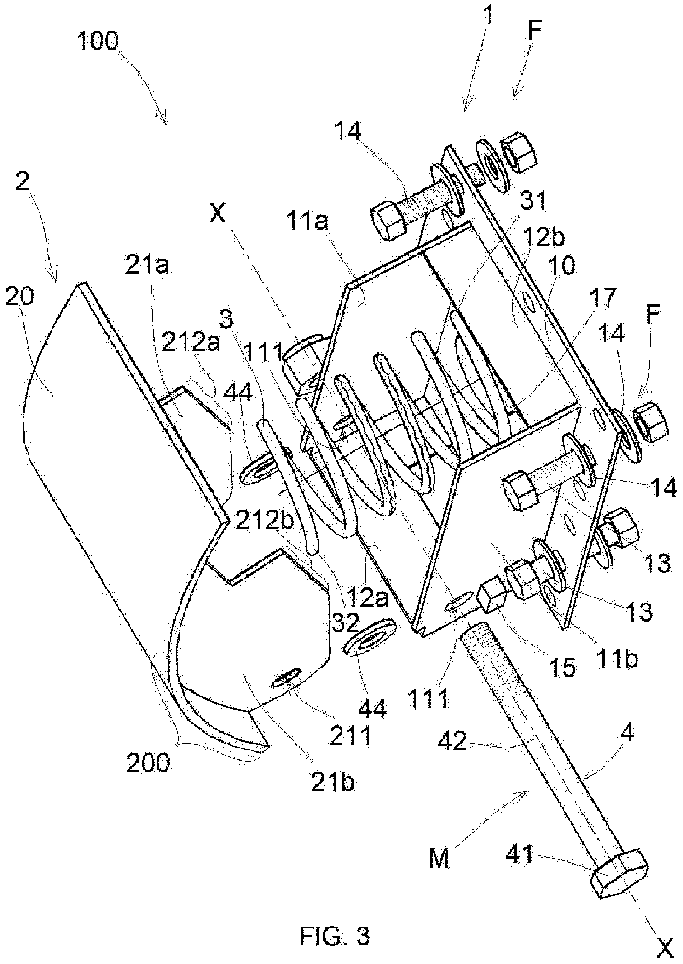

With reference to Figs. 2 and 3, the buffer (100) comprises pivoting means (M) that connect the backing element (2) to the bearing frame (1) in such a way that said backing element (2) rotates around an axis of horizontal rotation (X). The pivoting means (M) are disposed in correspondence of the base portion (2B) of the backing element (2).

With reference to Figs. 2, 3 and 4, the bearing frame (1) comprises a fixing plate (10) for fixing to the front vertical wall (R). The fixing plate (10) has a quadrangular shape, preferably a rectangular shape.

Preferably, said fixing means (F) comprise bolts (13) with nuts that are engaged in holes obtained in said fixing plate (10) and in holes obtained on the front vertical wall (R) of the loading bay (B), in such a way to anchor the bearing frame (1) to the front wall (R). The fixing means (F) also comprise washers (14) in axis with the bolts (13).

Alternatively, said fixing means (F) can comprise welding points or perimeter welding around the fixing plate (10), when the front vertical wall (R) is made of metal. The fixing means (F) can also comprise screw anchors if the buffer (100) is to be installed on loading bays made of reinforced concrete.

The bearing frame (1) comprises two lateral walls (11a, 11b) in parallel position and orthogonal to said fixing plate (10). When the bearing frame (1) is fixed to the front vertical wall (R), the two lateral walls (11a, 11b) of the bearing frame must be disposed in vertical position.

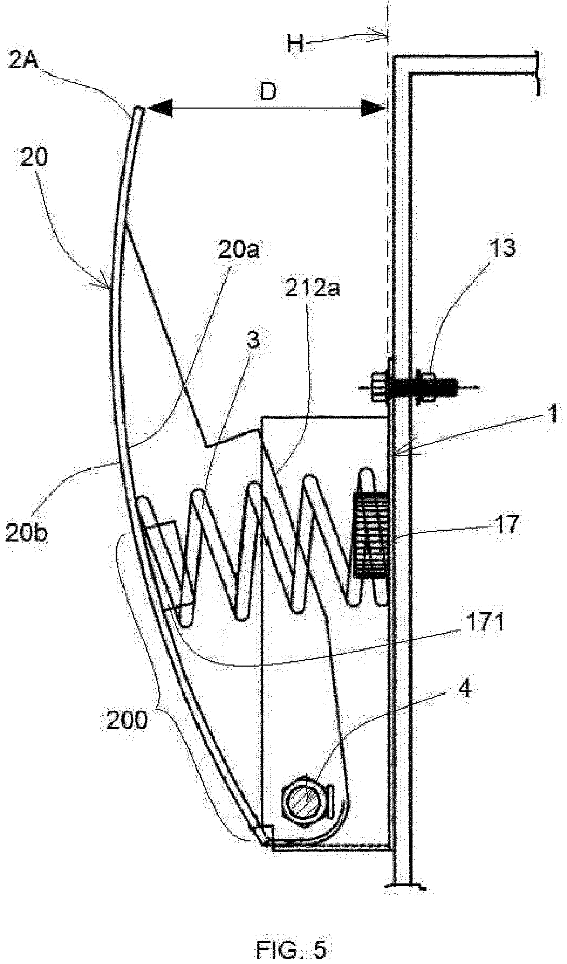

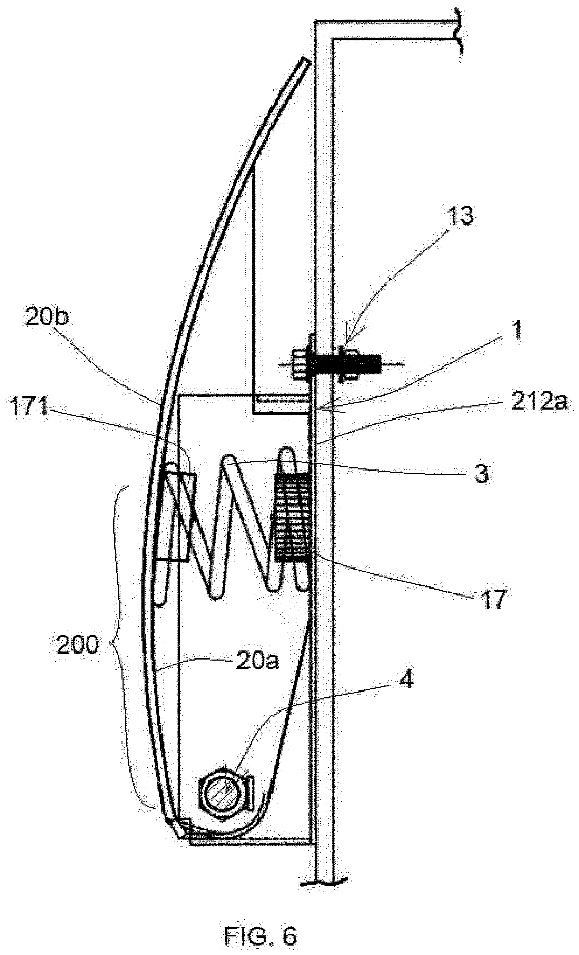

With reference to Figs. 5 and 6, the backing element (2) of the buffer (100) comprises a stop surface (200). The section of the stop surface (200) with a vertical plane orthogonal to said axis of horizontal rotation (X) has a curvilinear profile with concavity towards the bearing frame (1). Said curvilinear profile of the stop surface (200) is continuous, without corners and without flat surfaces. In fact, the behavior of a curvilinear surface is very different from the behavior of a flat surface.

The rear part of the vehicle is suitable for frictionally impacting the stop surface (200) when the vehicle stops is stopped at the end of its backward movement.

The backing element (2) comprises a tile-shaped element (20) comprising a first side (20a) that faces the bearing frame (1) and a second side (20b) that is directed outwards. The stop surface (200) is obtained in the second side (20b) of the tile-shaped element.

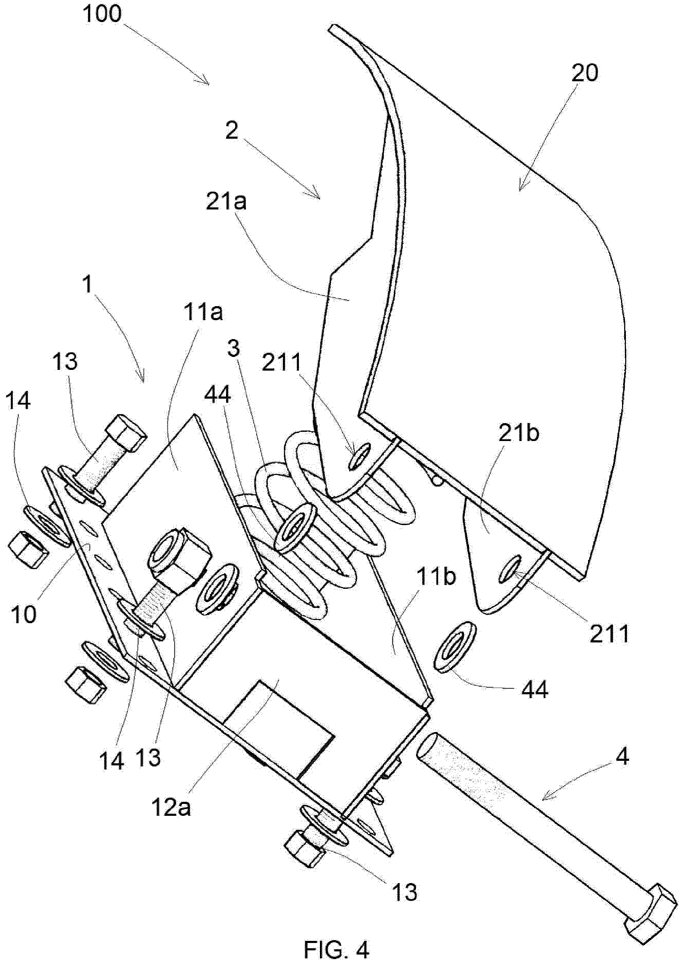

With reference to Figs. 3 and 4, the backing element (2) also comprises a pair of flanges (21a, 21b) that project in orthogonal direction from said first side (20a) of the tile-shaped element (20).

With reference to Figs. 3 and 4, the buffer (100) comprises an elastic member (30) that moves the backing element (2) away from the bearing frame (1). The elastic member (30) is disposed between the backing element (2) and the bearing frame (1), constantly exerting a force that moves the backing element (2) away from the bearing frame (1).

The elastic member (30) comprises a helical spring (3) with a first end (31) engaged against the bearing frame and a second end (32) engaged against the backing element;

The first end (31) and the second end (32) of the helical spring are connected to cylindrical shanks (17, 171) fixed on the bearing frame (1) and on the tile-shaped element (20) of the backing element (2).

The pivoting means (M) comprise a pin (4) inserted in an aligned pair of holes (111) provided on said lateral walls (11a, 11b) of the bearing frame (1) and in an aligned pair of holes (211) provided on said flanges (21a, 21b) of the backing element (2).

Preferably, the distance between said flanges (21a, 21b) is lower than the distance between the lateral walls (11a, 11b), and therefore the flanges are disposed between the lateral walls (11a, 11b).

Said pin (4) comprises a head (41) and a stem (42) inserted in said holes (111, 211). More precisely, said pin (4) consists in a bolt.

The buffer (100) comprises an anti-rotation means (15) that prevents the rotation of the pin (4) around its axis. The anti-rotation means (15) comprises a cube-like shelf that externally protrudes from one of the lateral walls (11a, 11b), in the proximity of the hole (111) obtained on the lateral wall (11b), in such a way that said shelf is engaged against the head (41) of the pin (4). Preferably, the shelf is made in one piece with the lateral wall (11b). The cube-like shelf prevents the rotation of the pin (4) around its axis because a lateral side of the head (41) is engaged against the cube-like shelf.

The pin (4) comprises two washers (44) in axis with the pin (4). Each washer (44) is disposed between a lateral wall (11a, 11b) of the bearing frame (1) and a flange (21a, 21b) of the backing element (2).

The helical spring (3) of the elastic member is disposed in a compartment that is defined by the lateral walls (11a, 11b) on the sides, by a first shelf (12a) that extends astride the lateral walls (11a, 11b) on the bottom, and by a second shelf (12b) that extends astride the lateral walls (11a, 11b) on top. The provision of shelves (12a, 12b) prevents the users from introducing their hands inside the compartment where the helical spring is situated, thus prevents possible tampering of the buffer (100) and injuries. The lower shelf (12a) is provided with a hole to drain the water in order to avoid stagnation.

The flanges (21a, 21b) are shaped in such a way to have an edge (212a, 212b) that is suitable for being engaged with said fixing plate (10) of the bearing frame (1) when the backing element (2) is pressed against the bearing frame (1).

With reference to Figs. 5 and 6, the backing element (12) can be moved from a first idle position, as shown in Fig. 5, to a second maximum compression position, as shown in Fig. 6.

With reference to Fig. 5, when the backing element (2) is in the first idle position, the helical spring (3) is loaded and retains the backing element (2), keeping the head portion (2A) of the backing element at a maximum distance (D) from a plane (H) parallel to the fixing plate (10). Such a distance (D) can be higher than 50 mm, preferably comprised between 50 and 250 mm, more preferably 147 mm.

With reference to Fig. 6, when the backing element (2) is in the second maximum compression position, the helical spring (3) is compresses and the head portion (2A) of the backing element is situated on the plane (H) parallel to the fixing plate (10), that is to say at a minimum distance (a few millimeters) or at no distance from the plane of the vertical wall (R) of the loading bay. In such a second maximum compression position, the edge (212a, 212b) of the flanges (21a, 21b) of the backing element (2) is stopped against the fixing plate (10) of the bearing frame (1). In such a maximum working position of the backing element, the compressed spring (3) is an additional surface that is compressed on the frame (1), in addition to the contact surface on the edges (212/a, 212/b) of the flanges of the backing element.

It must be considered that when a part of a vehicle impacts the backing element (2), the backing element (2) makes a rotation around the axis (X) that is higher than 10°, preferably comprised between 10° and 30°, more preferably 19.66°, to go from the first position to the second position, without any deformation, absorbing the impact by means of its rotation and ensuring a minimum contact between the surface of the vehicle and the stop surface (200). The minimum contact is always reduced to a line. Therefore friction is only present on one line for any type of movement.

During the rotation of the backing element, the distance (D) is progressively reduced, but the head portion (2A) of the backing element is not engaged against the fixing plate (10) or against the wall (R) of the loading bay, thus preventing any possible deformation of the backing element (2).

When the backing element (2) is disposed in an intermediate position between the first and the second position, every up-down movement of the body of a vehicle will cause an oscillation of the backing element (2) around the axis of horizontal rotation (X). The curvilinear profile of the stop surface (200) minimizes the friction between the stop surface (200) and the vehicle and consequently reduces the wear of the stop surface (200). Otherwise said, the friction is always reduced to a line and is therefore constant on a line, regardless of the causes that generate the oscillations and regardless of the exerted forces.

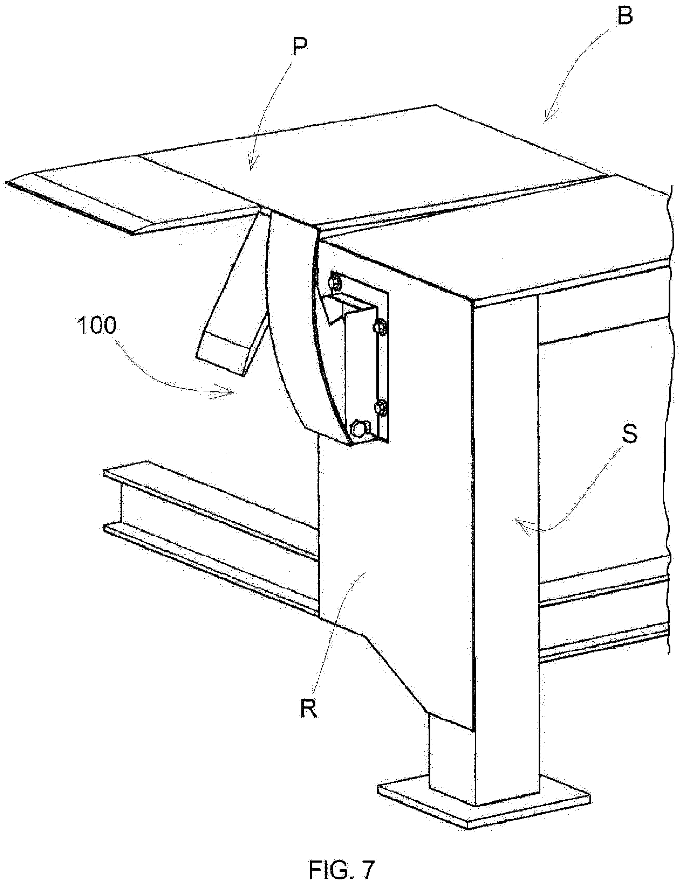

With reference to Fig. 7, the present invention also relates to a loading bay (B) comprising:
- a bearing framework (S) comprising a front vertical wall (R);
- a movable platform (P) disposed on said bearing framework (S) and removably connected to the bearing framework (S) with connection means;
- one or more buffers (100) of the aforementioned type that are fixed to the front vertical wall (R) of the bearing framework (S).

Advantageously, two buffers are provided at the ends of the movable platform (P).

The present invention has the following advantages.

The provision of the pivoting means (M), of the elastic member and of the stop surface (200) makes the buffer (100) extremely resistant to any type of stress that is exerted on the buffer (100). In fact, the buffer (100) can absorb all types of movement caused by an impact of a vehicle or by the loading/unloading operations.

When the vehicle approaches the loading bay (B), the vehicle presses against the backing element (2), the backing element (2) rotates around the axis of horizontal rotation (X) and the helical spring (3) is compressed, absorbing the impact of the vehicle against the loading bay (B) and protecting the loading bay (B).

The loading/unloading operations of the vehicle with a forklift truck generate sussultatory and undulatory movements of the loading platform of the vehicle. Being the vehicle stopped against the backing element (2), with the contact being represented by a line, the vehicle slides on said line in the stop surface (200) of the backing element (2). Also in this case, the vertical stress caused by the loading/unloading operations is converted into rotatory movements.

Because of the curvature of the stop surface (200), the contact and the frictional sliding between the vehicle and the backing element (2) only occur in a horizontal line, and not on a surface. In view of the above, the frictional resistance between the stop surface (200) of the backing element (2) and the vehicle is minimum, thus protecting the integrity of the backing element (2).

The vertical or horizontal stress is always converted into a rotatory movement of the backing element (2). The width of the rotation of the backing element (2) is always lower than the width of the horizontal or vertical movement that generates such a rotation. This fact allows for absorbing all types of rectilinear movement, in particular the vertical movements generated by the loading/unloading operations of the vehicle. Therefore the buffer (100) is more reliable, more resistant and less exposed to wear compared to the buffers of the prior art.

Numerous equivalent variations and modifications, which are within the reach of an expert of the field and fall in any case within the scope of the invention as disclosed by the appended claims, can be made to the present embodiment of the invention.

## Claims

1. Buffer (100) for loading bays (B) comprising:
- a bearing frame (1) with a fixing plate (10) suitable for being fixed to a front vertical wall (R) of the loading bay (B);
- fixing means (F) suitable for fixing the bearing frame (1) to said front vertical wall (R) of the loading bay (B);
- a backing element (2) comprising a head portion (2A), a base portion (2B) and a stop surface (200) with concavity that faces the bearing frame (1) and is suitable for receiving the impact of a vehicle;
- pivoting means (M) that connect the backing element (2) to the bearing frame (1) in such a way that said backing element (2) rotates around an axis of horizontal rotation (X); and
- an elastic member (30) disposed between the bearing frame (1) and the backing element (2),
**characterized in that**
when sectioned with a vertical plane that is orthogonal to said axis of horizontal rotation (X), said stop surface (200) has a continuous curvilinear profile without corners and without flat surfaces, in such a way that a surface of the vehicle can slide on the stop surface (200) with a minimum contact that is reduced to a contact line;
said elastic member (30) comprises a helical spring (3) with a first end (31) connected to the bearing frame and a second end (32) connected to the backing element;
said pivoting means (M) are disposed in correspondence of the base portion (2B) of the backing element and said head portion (2A) of the backing element is spaced by a maximum distance (D) from a plane (H) parallel to said fixing plate (10), in such a way that, during an impact, said backing element (2) rotates around said horizontal axis (X), compressing said helical spring (3) and preventing said head portion (2A) of the backing element from coming in contact with said bearing frame and/or said front vertical wall (R) of the loading bay (B), thus avoiding a deformation of the backing element (2).

2. The buffer of claim 1, wherein said helical spring (3) is configured in such a way to keep said head portion (2A) of the backing element at said maximum distance (D) from the plane (H) parallel to the fixing plate (10), so that, during an impact, said backing element (2) rotates around said horizontal axis (X) by an angle higher than 10, preventing said head portion (2A) of the backing element from coming in contact with said bearing frame and/or said front vertical wall (R) of the loading bay (B).

3. The buffer (100) of claim 1 or 2, wherein said maximum distance (D) of the head portion (2A) of the backing element from the plane (H) parallel to the fixing plate (10) is higher than 5 cm.

4. The buffer (100) of any one of the preceding claims, wherein said backing element (2) comprises a tile-shaped element (20) comprising a first side (20a) that faces the bearing frame (1) and a second side (20b) that is directed outwards and comprises said stop surface (200).

5. The buffer (100) of claim 4, wherein said bearing frame (1) comprises two lateral walls (11a, 11b) in parallel position and orthogonal to said fixing plate (10);
said backing element (2) comprises a pair of flanges (21a, 21b) in parallel position that project from said first side (20a) of the tile-shaped element (20); and
said pivoting means (M) comprise a pin (4) with horizontal axis (X) inserted in an aligned pair of holes (111) provided on said lateral walls (11a, 11b) of the bearing frame (1); said pin (4) being inserted in an aligned pair of holes (211) provided on said flanges (21a, 21b) of the backing element (2).

6. The buffer (100) of claim 5, wherein said flanges (21a, 21b) are suitably shaped to have an edge (212a, 212b) that is stopped against said fixing plate (10) of the bearing frame (1), when the backing element (2) is pressed against the bearing frame (1), in such a way to act as stop for said backing element (2).

7. The buffer (100) of claim 5, comprising an anti-rotation means (15) that blocks the rotation of the pin (4) around its axis.

8. The buffer (100) of claim 7, wherein said pin (4) comprises a head (41) and a stem (42); said anti-rotation means (15) comprising a cube-like shelf that externally protrudes from a lateral wall (11b) of the bearing frame in order to be stopped against said head (41) of the pin (4).

9. The buffer (100) of any one of the preceding claims, wherein said bearing frame (1) and said backing element (2) comprise cylindrical stems (17, 171) connected to said first end (31) and said second end (32) of the helical spring (3).

10. The buffer (100) of any one of the preceding claims, wherein said fixing means (F) comprise bolts (13) engaged in holes obtained in said fixing plate (10) and in holes obtained on the front vertical wall (R) of a loading bay (B).

11. Loading bay (B) comprising at least one buffer (100) according to any one of the preceding claims.

## Patentansprüche

1. Anschlagpuffer (100) für Laderampen (B), umfassend:
- einen Tragrahmen (1) mit einer Befestigungsplatte (10), die geeignet ist, an einer vertikalen Vorderwand (R) der Laderampe (B) befestigt zu werden;
- Befestigungsmittel (F), die geeignet sind, den Tragrahmen (1) an der vertikalen Vorderwand (R) der Laderampe (B) zu befestigen;
- ein Anschlagelement (2), umfassend einen Kopfabschnitt (2A), einen Basisabschnitt (2B) und eine Anschlagoberfläche (200) mit einer Einbuchtung, die dem Tragrahmen (1) zugewandt und geeignet sind, den Anprall eines Fahrzeugs aufzunehmen;
- Schwenkmittel (M), die das Anschlagelement (2) mit dem Tragrahmen (1) verbinden, derart, dass das Anschlagelement (2) sich um eine horizontale Drehachse (X) dreht; und
- ein elastisches Element (30), das zwischen dem Tragrahmen (1) und dem Anschlagelement (2) angeordnet ist,
**dadurch gekennzeichnet, dass**
die Anschlagoberfläche (200), im Schnitt mit einer vertikalen Ebene, die orthogonal zu der horizontalen Drehachse (X) verläuft, ein kontinuierliches krummliniges Profil ohne Ecken und ohne flache Oberflächen aufweist, derart, dass eine Oberfläche des Fahrzeugs auf der Anschlagoberfläche (200) mit einem minimalen Kontakt gleiten kann, der auf eine Kontaktlinie reduziert ist; das elastische Element (30) eine schraubenförmige Feder (3) umfasst, die ein erstes Ende (31) aufweist, das mit dem Tragrahmen verbunden ist, und ein zweites Ende (32), das mit dem Anschlagelement verbunden ist;
die Schwenkmittel (M) an dem Basisabschnitt (2B) des Anschlagelements angeordnet sind und der Kopfabschnitt (2A) des Anschlagelements in einem maximalen Abstand (D) von einer Ebene (H) parallel zu der Befestigungsplatte (10) beabstandet ist, derart, dass das Anschlagelement (2) sich bei einem Anprall um die horizontale Achse (X) drehen kann, wobei die schraubenförmige Feder (3) komprimiert und verhindert wird, dass der Kopfabschnitt (2A) des Anschlagelements mit dem Tragrahmen und/oder der vertikalen Vorderwand (R) der Laderampe (B) in Kontakt kommt, wodurch eine Deformation des Anschlagelements (2) vermieden wird.

2. Anschlagpuffer (100) nach Anspruch 1, wobei die schraubenförmige Feder (3) ausgebildet ist, um den Kopfabschnitt (2A) des Anschlagelements in dem maximalen Abstand (D) von der Ebene (H) parallel zu der Befestigungsplatte (10) zu halten, derart, dass das Anschlagelement (2) sich bei einem Anprall um die horizontale Achse (X) in einem Winkel von mehr als 10° drehen kann, wobei verhindert wird, dass der Kopfabschnitt (2A) des Anschlagelements mit dem Tragrahmen und/oder der vertikalen Vorderwand (R) der Laderampe (B) in Kontakt kommt.

3. Anschlagpuffer (100) nach Anspruch 1 oder 2, wobei der maximale Abstand (D) des Kopfabschnitts (2A) des Anschlagelements von der Ebene (H) parallel zu der Befestigungsplatte (10) größer als 5 cm ist.

4. Anschlagpuffer (100) nach einem der vorstehenden Ansprüche, wobei das Anschlagelement (2) ein dachplattenartiges Element (20) umfasst, umfassend eine erste Seite (20a), die dem Tragrahmen (1) zugewandt ist, und eine zweite Seite (20b), die nach außen gerichtet ist und die Anschlagoberfläche (200) umfasst.

5. Anschlagpuffer (100) nach Anspruch 4, wobei der Tragrahmen (1) zwei Seitenwände (11a, 11b) umfasst, die zueinander parallel und orthogonal zu der Befestigungsplatte (10) sind;
das Anschlagelement (2) ein Paar von Flanken (21a, 21b) umfasst, die zueinander parallel sind und aus der ersten Seite (20a) des dachplattenartigen Elements (20) vorstehen; und
die Schwenkmittel (M) einen Stift (4) mit horizontaler Achse (X) umfassen, der in ein Paar gefluchteter Löcher (111) eingesteckt ist, die auf den Seitenwänden (11a, 11b) des Tragrahmens (1) vorgesehen sind; wobei der Stift (4) in ein Paar gefluchteter Löcher (211) eingesteckt ist, die auf den Flanken (21a, 21b) des Anschlagelements (2) vorgesehen sind.

6. Anschlagpuffer (100) nach Anspruch 5, wobei die Flanken (21a, 21b) derart geformt sind, dass sie eine Kante (212a, 212b) aufweisen, die gegen die Befestigungsplatte (10) des Tragrahmens (1) in Anschlag geht, wenn das Anschlagelement (2) gegen die Tragrahmen (1) gedrückt wird, so dass sie als Endanschlag für das Anschlagelement (2) fungieren.

7. Anschlagpuffer (100) nach Anspruch 5, umfassend eine Verdrehsicherung (15), die die Drehung des Stifts (4) um seine eigene Achse verhindert.

8. Anschlagpuffer (100) nach Anspruch 7, wobei der Stift (4) einen Kopf (41) und einen Schaft (42) umfasst; wobei die Verdrehsicherung (15) eine quaderförmige Konsole umfasst, die aus einer Seitenwand (11b) des Tragrahmens nach außen vorsteht, um gegen den Kopf (41) des Stifts (4) in Anschlag zu gehen.

9. Anschlagpuffer (100) nach einem der vorstehenden Ansprüche, wobei der Tragrahmen (1) und das Anschlagelement (2) zylinderförmige Schäfte (17, 171) umfassen, die mit dem ersten Ende (31) und dem zweiten Ende (32) der schraubenförmigen Feder (3) verbunden sind.

10. Anschlagpuffer (100) nach einem der vorstehenden Ansprüche, wobei die Befestigungsmittel (F) Bolzen (13) umfassen, die sowohl in Löcher eingreifen, die auf der Befestigungsplatte (10) herausgearbeitet sind, als auch in Löcher, die auf der vertikalen Vorderwand (R) der Laderampe (B) herausgearbeitet sind.

11. Laderampe (B), umfassend mindestens einen Anschlagpuffer (100) nach einem der vorstehenden Ansprüche.

## Revendications

1. Tampon pare-chocs (100) pour quais de chargement (B) comprenant :
- un châssis de support (1) doté d'une plaque de fixation (10) destinée à être fixée sur une paroi verticale frontale (R) du quai de chargement (B) ;
- des moyens de fixation (F) destinés à fixer le châssis de support (1) sur ladite paroi verticale frontale (R) du quai de chargement (B) ;
- un élément d'appui (2) comprenant une extrémité de tête (2A), une extrémité de base (2B) et une surface de butée (200) ayant la concavité orientée vers le châssis de support (1) et destinée à subir l'impact d'un véhicule ;
- des moyens de pivotement (M) qui relient l'élément d'appui (2) au châssis de support (1) de façon à ce que ledit élément d'appui (2) tourne autour d'un axe de rotation horizontal (X) ; et
- un organe élastique (30) disposé entre le châssis de support (1) et l'élément d'appui (2),
**caractérisé en ce que**
ladite surface de butée (200), en section avec un plan vertical orthogonal au dit axe de rotation horizontal (X), présente un profil curviligne continu, sans arêtes et sans surfaces plates, de façon à ce qu'une surface du véhicule puisse glisser sur la surface de butée (200) avec un contact minimum réduit à une ligne de contact ;
ledit organe élastique (30) comprend un ressort hélicoïdal (3) ayant une première extrémité (31) reliée au châssis de support et une seconde extrémité (32) reliée à l'élément d'appui ;
lesdits moyens de pivotement (M) sont disposés en correspondance de l'extrémité de base (2B) de l'élément d'appui et ladite extrémité de tête (2A) de l'élément d'appui est écartée d'une distance maximum (D) d'un plan (H) parallèle à ladite plaque de fixation (10), de sorte que, lors d'un impact, ledit élément d'appui (2) puisse pivoter autour du dit axe horizontal (X), en comprimant ledit ressort hélicoïdal (3), sans que ladite extrémité de tête (2A) de l'élément d'appui entre en contact avec ledit châssis de support et/ou de la paroi verticale frontale (R) du quai de chargement (B) afin d'éviter une déformation de l'élément d'appui (2).

2. Tampon pare-chocs (100) selon la revendication 1, où ledit ressort hélicoïdal (3) est configuré de façon à maintenir ladite extrémité de tête (2A) de l'élément d'appui à ladite distance maximum (D) du plan (H) parallèle à la plaque de fixation (10), de façon que, lors d'un impact, ledit élément d'appui (2) puisse pivoter autour du dit axe horizontal (X) d'un angle de plus de 10°, sans que ladite extrémité de tête (2A) de l'élément d'appui entre en contact avec ledit châssis de support et/ou ladite paroi verticale frontale (R) du quai de chargement (B).

3. Tampon pare-chocs (100) selon la revendication 1 ou 2, où ladite distance maximum (D) de l'extrémité de tête (2A) de l'élément d'appui depuis le plan (H) parallèle à la plaque de fixation (10) est majeure de 5 cm.

4. Tampon pare-chocs (100) selon l'une quelconque des revendications précédentes, où ledit élément d'appui (2) comprend une tuile (20) comprenant une première face (20a) orientée vers le châssis de support (1) et une seconde face (20b) orientée vers l'externe et qui comprend ladite surface de butée (200).

5. Tampon pare-chocs (100) selon la revendication 4, où ledit châssis de support (1) comprend deux parois latérales (11a, 11b) parallèles entre elles et orthogonales à ladite plaque de fixation (10) ;
ledit élément d'appui (2) comprend une paire d'ailes (21a, 21b) parallèles entre elles qui débordent de ladite première face (20a) de la tuile (20) ; et
lesdits moyens de pivotement (M) comprennent un pivot (4) ayant axe horizontal (X) enfilé dans une paire alignée d'orifices (111) prévus sur lesdites parois latérales (11a, 11b) du châssis de support (1) ; ledit pivot (4) étant enfilé dans une paire alignée d'orifices (211) prévus sur lesdites ailes (21a, 21b) de l'élément d'appui (2).

6. Tampon pare-chocs (100) selon la revendication 5, où lesdites ailes (21a, 21b) sont façonnées de manière telle à présenter un bord (212a, 212b) qui va en butée contre ladite plaque de fixation (10) du châssis de support (1), lorsque l'élément d'appui (2) est enfoncé contre le châssis de support (1), de manière à fonctionner en tant que fin de course pour ledit élément d'appui (2).

7. Tampon pare-chocs (100) selon la revendication 5, comprenant un moyen anti-rotation (15) qui bloque la rotation du pivot (4) autour de son axe.

8. Tampon pare-chocs (100) selon la revendication 7, où ledit pivot (4) comprend une tête (41) et une tige (42) ; ledit moyen anti-rotation (15) comprenant une tablette en forme de cube qui déborde extérieurement depuis une paroi parallèle (11b) du châssis de support pour aller en butée contre ladite tête (41) du pivot (4).

9. Tampon pare-chocs (100) selon l'une quelconque des revendications précédentes, où ledit châssis de support (1) et ledit élément d'appui (2) comprennent des tiges cylindriques (17, 171) reliées à ladite première extrémité (31) et à ladite seconde extrémité (32) du ressort hélicoïdal (3).

10. Tampon pare-chocs (100) selon l'une quelconque des revendications précédentes, où lesdits moyens de fixation (F) comprennent des boulons (13) engagés tant dans les orifices réalisés sur ladite plaque de fixation (10) que dans les orifices réalisés sur la paroi verticale frontale (R) d'un quai de chargement (B).

11. Quai de chargement (B) comprenant au moins un tampon pare-chocs (100) selon l'une quelconque des revendications précédentes.
